Europäisches Patentamt

European Patent Office

Office européen des brevets

(11) Veröffentlichungsnummer: **0 097 786**
A1

# (12) EUROPÄISCHE PATENTANMELDUNG

(21) Anmeldenummer: 83104056.3

(22) Anmeldetag: 26.04.83

(51) Int. Cl.³: **D 21 H 3/36**
D 21 H 3/60, B 01 D 19/04

(30) Priorität: 25.06.82 DE 3223731

(43) Veröffentlichungstag der Anmeldung:
11.01.84 Patentblatt 84/2

(84) Benannte Vertragsstaaten:
AT DE FR GB SE

(71) Anmelder: CHEMISCHE WERKE HÜLS AG
- RSP Patente / PB 15 - Postfach 13 20
D-4370 Marl 1(DE)

(72) Erfinder: Gude, Fritz, Dr.
Wilhelmstrasse 4
D-4690 Herne 2(DE)

(72) Erfinder: Haferkorn, Herbert
Horster Strasse 528
D-4250 Bottrop(DE)

(72) Erfinder: Müller, Wilhelm, Dr.
Riedweg 34
D-4270 Dorsten(DE)

(72) Erfinder: Scholz-Weigl, Sigrid, Dr.
Kreuzstrasse 309
D-4370 Marl(DE)

(72) Erfinder: Winter, Rolf
Goldbergstrasse 84 a
D-4660 Gelsenkirchen-Buer(DE)

(54) Verwendung von gegebenenfalls alkylsubstituierten Phenolpolyalkylenglykolethern als Entschäumer in Papierleimungsmitteln.

(57) Es werden gegebenenfalls alkylsubstituierte Phenolpoly-alkylenglykolether als Entschäumer in Papierleimungsmitteln oder Papierleimungsflotten in wässrig-alkalischer Lösung eingesetzt. Diese Phenolpolyalkylenglykolether zeigen einen Trübungspunkt von 10 - 70°C bei einer 2 %igen Lösung in voll entsalztem Wasser und eine Molmasse von 600 - 5000. Sie enthalten 6 - 40 Ethylenoxid- und 6 - 40 Propylenoxideinheiten als Blöcke oder statistisch verteilt. Die Alkylgruppen können 1 - 14 C-Atome enthalten. Eine Kombination mit bekannten Entschäumern ist möglich.

### Verwendung von gegebenenfalls alkylsubstituierten Phenolpolyalkylenglykolethern als Entschäumer in Papierleimungsmitteln

Wäßrig-alkalische Lösungen von Copolymerisaten des Maleinsäureanhydrids besitzen ein breites Anwendungsspektrum. So lassen sie sich, z.B. nach DE-OS 2 417 172, vorteilhaft in Glanz- und Reinigungsrezepturen und, z.B. nach DE-OS 3 104 621, als anionische Papieroberflächenleimungsmittel, Emulgatoren, Verdickungsmittel usw. einsetzen.

Leider neigen die alkalisch-wäßrigen Lösungen der o.g. Polymerisate bei ihrer Verarbeitung zum Schäumen, was ihre Verwendung erschwert und oft sogar in Frage stellt. Besonders bei ihrem Einsatz als anionische Papierleimungsmittel in wäßrig-alkalischen Lösungen, wobei ihnen auch noch u.a. oxidativ bzw. enzymatisch abgebaute Stärken zugesetzt werden – diese Kombination ist die fertige sogenannte Leimflotte – behindert der Schaumaufbau ihre Verwertung erheblich. Das macht sich in der Praxis besonders dann unangenehm bemerkbar, wenn durch relativ große Fallhöhen beim Rücklauf der Leimflotte aus der Leimpresse Luftbläschen eingeschlossen werden. Häufig erhöht sich der Effekt noch durch apparative Gegebenenheiten und/oder einen in dieser Hinsicht unzweckmäßigen Stärketyp.

Auch die Papierqualität selbst kann durch das Schäumen sehr nachteilig beeinflußt werden. Durch die dadurch bedingte, unregelmäßige Beaufschlagung, die manchmal bis zum Abriß der Papierbahn führt, sind häufig Produktionsunterbrechungen nicht zu vermeiden.

Allgemein werden als Entschäumer meist ölige Substanzen direkt zu der Papierleimflotte gegeben, wobei diese Entschäumer infolge ihrer geringen Mischbarkeit mit der schäumenden Flüssig-

0097786
O.Z.3815-H

keit und ihres spezifischen Gewichts wegen dazu neigen, sich in der Grenzfläche Flüssigkeit/Gas anzureichern und dadurch die Stabilität der Schaumlamellen stark herabzusetzen. Man verwendet z.B. Fette, Öle, Paraffine, Paraffinöle, Fettalkohole, Silikonöle, höhere Alkohole, Ester usw., aber auch nach DE-AS 2 161 772 die in wäßrigen Medien unlöslichen 6-60-fach oxipropylierten $C_{12}$ bis $C_{30}$-gesättigten geradkettigen Fettalkohole oder die nach z.B. DE-OS 1 595 369 ebenfalls unlöslichen, alkaliempfindlichen, mit Carbonsäuren veresterten oxialkylierten Alkohole.

Gerade die Unlöslichkeit in dem zu entschäumenden Medium macht diese Substanzen für die Entschäumung der wäßrig-alkalischen Maleinsäureanhydrid-Polymerisate, z.B. für die Papierleimung, weniger geeignet, da sie beim Stehen der Leimlösung abrahmen und sich bei der Leimungstemperatur von etwa 40-80°C ohne erheblichen Aufwand nicht wieder ausreichend verteilen, um voll wirksam zu sein.

Es wäre wünschenswert, für die Leimflotte einen alkalistabilen Entschäumer zu haben, der sich z.B. in wäßrig-alkalischen Lösungen von Maleinsäureanhydrid-Copolymerisaten löst und erst bei den Arbeitstemperaturen während der Papierleimung sehr fein verteilt ölig ausfällt, dann eine beständige Emulsion bildet und so voll wirksam wird. Dem konnte nun voll entsprochen werden, denn es wurde überraschend gefunden, daß gewisse Polyether, aufgebaut aus Ethylenoxid und Propylenoxid auf einer geeigneten Basissubstanz mit beweglichem Wasserstoff und einem Trübungspunkt einer 2%igen wäßrigen Lösung von 10-70°C in voll entsalztem Wasser, für die Entschäumung von wäßrig-alkalischen und alkoholisch-wäßrig-alkalischen Lösungen von Polymerisaten aus Maleinsäureanhydrid-Copolymerisaten hervorragend geeignet sind, wenn man einen pH ab etwa 7,5 in der Leimflotte einstellt. Dabei ist es möglich, Ethylen- und Propylenoxid gemeinsam statistisch zu polymerisieren oder Blöcke aus den beiden Produkten herzustellen.

0097786
O.Z.3815-H

Gegenstand der Erfindung ist daher die Verwendung von gegebenenfalls alkylsubstituierten Phenolpolyalkylenglykolethern als Entschäumer in Papierleimungsmitteln auf Basis Maleinsäureanhydrid-Copolymerisaten und/oder Papierleimungsflotten in wäßrig-alkalischer Lösung, wobei diese Phenolpolyalkylenglykolether einen Trübungspunkt von 10-70°C als 2%ige Lösung in voll entsalztem Wasser und eine relative Molmasse von 600-5000 besitzen.

Die für diese Verwendung geeigneten Polyether wurden durch Addition von 6-40 Molen Ethylenoxid und 6-40 Molen Propylenoxid an ein Mol eines gegebenenfalls alkylsubstituierten Phenols hergestellt. Wird ein Alkylphenol verwendet, kann die Alkylgruppe 1-14 C-Atome besitzen. Grundsätzlich können auch Phenole mit mehreren Alkylgruppen zur Herstellung der Polyether zum Einsatz kommen.

Es ist bekannt, daß sich reine Polyethylenoxide mit Wasser bei Raumtemperatur wegen der Hydratisierung der Ethersauerstoffatome und der endständigen Hydroxylgruppe in jedem Verhältnis mischen lassen. Sie haben keine nennenswerte Entschäumerwirkung. Mit zunehmender Kohlenstoffzahl der monomeren Alkylenoxide nimmt die Löslichkeit der Polyalkylenoxide im Wasser ab, was auf einer prozentualen Verminderung der Sauerstoffatome und auch auf ihrer sterischen Abschirmung durch die Alkylgruppe beruht. So sind beispielsweise Polypropylenoxide mit einem Molgewicht über 1000 in Wasser unlöslich, weil bei ihnen der hydrophile Einfluß der endständigen Hydroxylgruppe praktisch nicht mehr wirksam ist. Bemerkenswert ist, daß mit steigender Temperatur die Löslichkeit der Polyalkylenoxide in Wasser sinkt, da die Hydratisierung zunehmend zurückgeht.

Durch ein geeignetes Verhältnis von Ethylenoxid und Propylenoxid am phenolischen Rest kann ein Copolymerisat hergestellt werden, das in kaltem Wasser zwar löslich ist, bei steigenden Temperaturen, z.B. 40°C, aber fein verteilt ausfällt. Dadurch kommt die Entschäumerwirkung voll zur Entfaltung.

Die Trübungspunkte der wirksamen Ethylenoxid-Propylenoxid-Polymerisate werden durch Messungen einer 2%igen Lösung in Wasser nach DIN 53917 bestimmt. Dieser Wert verschiebt sich u.a. durch Änderung des pH-Wertes und ist nicht identisch mit dem Trübungspunkt in der erfindungsgemäß verwendeten alkalischen Lösung der Maleinsäureanhydrid-Polymerisate.

Überraschend ist, daß der pH-Wert der Lösung einen erheblichen Einfluß auf die Entschäumung der alkalischen Maleinsäureanhydrid-Polymerisatlösung in Anwesenheit der Polyether hat, in dem Sinne, daß ein hoher Wert begünstigend auf die Entschäumung wirkt. Die Verwendung von Ammoniak in Wasser wird als alkalisches Medium bevorzugt.

Anstelle von Ammoniak können aber auch beliebige primäre, sekundäre oder tertiäre wie auch quartäre Ammoniumsalze oder Alkanolamine, wie z.B.Ethanolamin, oder auch Alkalien zur Einstellung des pH-Wertes verwendet werden. Selbstverständlich ist auch der Einsatz von Gemischen aller dieser alkalisch wirkenden Substanzen möglich.

Auch durch relativ geringe Gaben Entschäumer können beim Einsatz der Maleinsäurecopolymerisate als Papierleimungsmittel die Leimungswerte negativ beeinflußt werden. Aus diesem Grunde ist es so bedeutungsvoll, daß die Einstellung eines hohen pH-Wertes ab 7,5 (gemessen in der Leimflotte) u.a. eine geringere Zugabe von Entschäumern zuläßt und dadurch die ungünstige Beeinflussung der Leimungswerte durch den Entschäumer ganz oder teilweise wieder aufhebt. Die Anwesenheit von stark ionisierten Salzen dagegen hat praktisch keinen Einfluß auf die Entschäumung einer wäßrig-alkalischen Lösung in Gegenwart von geeigneten Polyethern.

Der Vorteil der vorliegenden Erfindung liegt besonders darin, daß man den Entschäumer schon vor der Verarbeitung zu der Leimlösung hinzufügen kann, wobei bei Normaltemperatur vollständige Lösung eintritt.

Gewöhnlich erfolgt der Zusatz eines handelsüblichen Entschäumers wegen des unerwünschten Abrahmens erst unmittelbar vor der Verarbeitung.

Selbstverständlich ist es möglich, der Flotte mit dem erfindungsgemäß eingesetzten Entschäumer auch bereits bekannte, unlösliche Entschäumer bei der Verarbeitung zuzufügen, wobei sich in vielen Fällen überraschenderweise sogar synergistische Effekte zeigen.

Die in den folgenden Beispielen aufgeführten Maleinsäureanhydrid-Copolymerisate wurden z.B. nach den DE-OSSen 31 04 621, 30 21 838, 30 46 648, 30 46 647, 30 49 432, 29 39 293 und 29 41 589 hergestellt. Ihre Konzentrationen in den wäßrig-alkalischen Lösungen betrugen 20 g/l.

Die Trübungspunkte der als Entschäumer eingesetzten Ethylenoxid-Propylenoxid-Addukte wurden als 2%ige Lösung in reinem Wasser nach DIN 53917, die Cobb-Werte des Papiers nach der Leimung nach DIN 53132 und die Leimungsgrade in dem Leimungsprüfgerät der Firma Frank, Mannheim-Rheinau, in Anlehnung an DIN 53145 bestimmt. Die Messungen der pH-Werte erfolgten potentiometrisch.

Beispiele:

A) Herstellung von Ethylenoxid-Propylenoxid-Addukten von Phenolen.

In einem mit Stickstoff gespülten Rührautoklaven wurde ein Mol Phenol bzw. Alkylphenol vorgelegt und nach Zugabe von katalytisch wirksamen Mengen gepulvertem Natriumhydroxid (entsprechend 0,05 - 0,01 % Na, bezogen auf das Endprodukt) bei 130°C unter Durchleiten von Stickstoff etwa eine halbe Stunde lang von Wasserspuren befreit. Nach Abstellen der Stickstoffzufuhr wurde Ethylenoxid in den Reaktionskolben nach Maßgabe des Verbrauchs eingeleitet, unter Aufrechterhaltung einer Reaktionstemperatur von 160-180°C.

Nach Anlagerung der gewünschten Menge Ethylenoxid und einer gewissen Nachreaktionszeit wurde mit der Zugabe von Propylenoxid fortgefahren, bis die gewünschte Menge an Propylenoxid reagiert hatte.

Zur Herstellung eines gegebenenfalls alkylsubstituierten Phenolpropylenoxid-Ethylenoxid-Adduktes begann man in analoger Weise zuerst mit der Anlagerung von Propylenoxid und fuhr mit der Zugabe von Ethylenoxid fort. Zur Herstellung eines Mischadduktes leitete man das Gemisch der beiden Alkylenoxide im gewünschten Verhältnis in den Reaktionskolben ein.

B) Herstellung der Leimflotte

Die Leimflotte ist ein Gemisch aus Stärkelösung und Leimlösung, die als eigentliche Präparationslösung angewandt wurde.

80 g Stärke AMISOL 05590 (Fa.Maizena) wurden in
920 g Wasser eingegeben und allmählich bis 100°C unter Rückflußkühlung erhitzt.
735 g der Stärkelösung (8%ig) wurden mit
15 g 10%igem Leimungsmittel vermischt.

Dieses entspricht einem Verhältnis Leimungsmittel/Stärke 1:20, bezogen auf Festkörper.

C) Schaummessung

Die Schaummeßapparatur besteht aus einer Schlauchpumpe mit PVC-Schläuchen von 6 mm innerem Durchmesser, Verbindungsstücken und Glasrohren als Zuleitung bzw. Ableitung und einem Meßzylinder von 8 cm Durchmesser. 750 ml Leimflotte wurden in den Meßzylinder hineingegeben und über die Pumpe mittels eines eintauchenden Glasrohres angesaugt und wieder zurückgepumpt bei einer Pumpgeschwindigkeit von 40 1/h mit einer Fallhöhe von 20 cm. Sie hatte eine Temperatur von 60°C. Die Leimflotte wurde 15 Minuten lang umgepumpt, wobei sich eine bestimmte Schaumhöhe aufbaute.

## D) Ergebnisse

In der folgenden <u>Tabelle I</u> sind einige repräsentative Entschäumer und ihr Einfluß auf die Oberflächenleimung von Papier aufgeführt. Einzelheiten der Leimung wurden in der DE-OS 2 727 510 näher beschrieben. Ohne Entschäumer wurden bei den Testflotten unter Verwendung der aufgeführten polymeren Salze und bei einem pH von 8,1 folgende Schaumhöhen gemessen:

Copolymerisat aus Maleinsäureanhydrid/Dicyclopentadien als Ammoniumsalz: 13 cm
Copolymerisat aus Maleinsäureanhydrid/Dicyclopentadien als Natriumsalz: 6,5 cm
Copolymerisat aus Maleinsäureanhydrid/Styrol als Natriumsalz: 14,5 cm
Copolymerisat aus Maleinsäureanhydrid/70 Mol% Dicyclopentadien und 30 Mol% Vinylcyclohexen als Ammoniumsalz: 8,5 cm
Copolymerisat aus Maleinsäureanhydrid/Dicyclopentadien als 95%iges Ammoniumsalz und 5%iges Ethanolammoniumsalz: 5 cm.

Es wurden folgende Abkürzungen verwendet:

| | | |
|---|---|---|
| EO | = | Ethylenoxid |
| PO | = | Propylenoxid |
| R- | = | Alkyl- |
| Tr. | = | Trübungspunkt |
| Entsch. | = | Entschäumer |
| F | = | Leimflotte |
| Lgr. | = | Leimungsgrad |
| Sch. | = | Schaumhöhe |
| Cobb | = | Cobb-Wert |
| Co | = | Copolymerisationspartner für das Maleinsäureanhydrid |
| DCP | = | Dicyclopentadien |
| St | = | Styrol |
| VCH | = | 1-Vinylcyclohexen-(3) |

EA$^+$ = Ethanolammonium-Ion

Nop 8034 = Siliconentschäumer
Nopco 8034

Nop 9100 A = Siliconfreier Entschäumer
Nopco 9100 A

$\left.\begin{array}{l} \\ \\ \\ \\ \\ \\ \end{array}\right\}$ der Fa.Münzing
Chemie GmbH,
Heilbronn

## Tabelle 1

Entschäumer: R-⬡-(O-Alkylen)-OH bzw. R,R-⬡-(O-Alkylen)-OH

| Nr. | R- | Zusammensetzung Reihenfolge und Mol-Verhältnisse der Alkylene | Tr. (°C) | Entsch.-Menge in der F. (Gew.% x 10^{-3}) | Leimungsmittel Co | Kation | Sch. in der F (cm) | Leimung ohne Entsch. Cobb$_2$ (gr/m²) | Lgr. (sec.) | mit Entsch. Cobb$_2$ (gr/m²) | Lgr. (sec.) |
|---|---|---|---|---|---|---|---|---|---|---|---|
| 1 | - | 20 EO + 20 PO | 37 | 6 | DCP | NH$_4^+$ | 9,5 | 19 | 223 | 21 | 185 |
| 2 | 2-Methyl- | 20 EO + 20 PO | 33 | 6 | DCP | NH$_4^+$ | 6,0 | 19 | 223 | 21 | 202 |
| 3 | 3,5-Di-methyl | 10 EO + 10 PO | 30 | 6 | DCP | NH$_4^+$ | 4,0 | 19 | 223 | 20 | 205 |
| 4 | 4-Ethyl- | 10 EO + 10 PO | 32 | 6 | DCP | NH$_4^+$ | 4,0 | 19 | 223 | 20 | 215 |
| 5 | 3,4-Di-Ethyl- | 10 EO + 10 PO | 35 | 6 | DCP | NH$_4^+$ | 3,0 | 19 | 223 | 20 | 201 |
| 6 | tert.-Butyl- | 10 EO + 10 PO | 33 | 6 | DCP | NH$_4^+$ | 2,5 | 19 | 223 | 19 | 218 |
| 7 | Nonyl- | 7 EO + 30 PO | 10 | 6 | DCP | NH$_4^+$ | 6,0 | 19 | 223 | 19 | 220 |
| 8 | Nonyl- | 30 EO + 7 PO | 70 | 6 | DCP | NH$_4^+$ | 3,0 | 19 | 223 | | |
| 9 | " | 7 EO + 7 PO | 26 | 6 | DCP | " | 1,5 | 19 | 223 | 19 | 215 |
| 10 | " | 30 EO + 30 PO | 41 | 6 | DCP | " | 0,5 | 19 | 223 | 19 | 170 |
| 11 | " | 7 PO + 13 EO | 45 | 6 | DCP | " | 5,5 | 19 | 223 | 19 | 190 |
| 12 | " | 30 EO + 30 PO | 41 | 6 | DCP | Na$^+$ | 1,0 | 25 | 200 | 25 | 180 |
| 13 | " | 13 EO + 13 PO | 36 | 6 | St | Na$^+$ | 0,5 | 20 | 130 | 25 | 125 |
| 14 | " | 9 PO + 8 EO (Statistisches Verhältnis) | 13 | 6 | DCP | NH$_4^+$ | 4,0 | 19 | 223 | 19 | 186 |
| 15 | Dodecyl- | 20 EO + 20 PO | 40 | 6 | DCP | NH$_4^+$ | 1,0 | 19 | 223 | 19 | 220 |
| 16 | 90% Nonyl- 5% Decyl- 5% Octyl- | 9 EO + 10 PO | 34 | 6 | DCP | NH$_4^+$ | 2,0 | 19 | 223 | 20 | 220 |
| 17 | Nonyl- | 20 EO + 20 PO | 40 | 6 | 70% DCP 30% VCH | NH$_4^+$ | 2,0 | 19 | 246 | 20 | 225 |
| 18 | " | 20 EO + 20 PO | 40 | 6 | DCP | 5% EA$^+$ 95% NH$_4^+$ | 3,0 | 19 | 238 | 20 | 230 |
| 19 | " | 9 EO + 10 PO | 34 | 2 | DCP | NH$_4^+$ | 3,5 | 19 | 223 | 19 | 219 |
| 20 | " | 9 EO + 10 PO | 34 | 1 (1 Nop 8034) | DCP | NH$_4^+$ | 1,0 | 19 | 223 | 19 | 213 |
| 21 | Nonyl- | 9 EO + 10 PO | 34 | 8 | DCP | NH$_4^+$ | 1,0 | 19 | 223 | 20 | 200 |
| 22 | " | 9 EO + 10 PO | 34 | 4 (4 Nop 9100A) | DCP | NH$_4^+$ | 0 | 19 | 223 | 20 | 190 |

0097786-H

Tabelle II macht den Einfluß der pH-Werte der Leimlösung auf die Entschäumung mit Ethylenoxid-Propylenoxidpolymerisaten, gemäß dieser Erfindung, deutlich.

Es wurde der pH-Wert des Versuchs Nr. 7 der Tabelle I variiert.

## Tabelle II

| pH | Schaum in der Flotte (cm) |
|---|---|
| 7,6 | 8 |
| 8,1 | 6 |
| 9,1 | 3,5 |
| 9,9 | 2,5 |

Patentansprüche:

1. Verwendung von gegebenenfalls alkylsubstituierten Phenolpolyalkylenglykolethern als Entschäumer in Papierleimungsmitteln auf Basis Maleinsäureanhydrid-Copolymerisaten und/oder Papierleimungsflotten in wäßrig-alkalischer Lösung, wobei diese Phenolpolyalkylenglykolether einen Trübungspunkt von 10-70°C der 2%igen Lösung in voll entsalztem Wasser und eine relative Molmasse von 600-5000 besitzen.

2. Verwendung von gegebenenfalls alkylsubstituierten Alkylphenolpolyalkylenglykolethern als Entschäumer nach Anspruch 1, dadurch gekennzeichnet, daß sie 6-40 Ethylenoxid- und 6-40 Propylenoxideinheiten als Blöcke oder statistisch verteilt und gegebenenfalls Alkylgruppen von $C_1$-$C_{14}$ enthalten.

3. Verwendung von gegebenenfalls alkylsubstituierten Phenolpolyalkylenglykolethern als Entschäumer nach den Ansprüchen 1 und 2, dadurch gekennzeichnet, daß sie mit bekannten Entschäumern kombiniert werden.

Europäisches Patentamt

# EUROPÄISCHER RECHERCHENBERICHT

## '' EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | US-A-4 040 900 (E.D. MAZZARELLA et al.) <br> * Ansprüche 1,3,4,7; Spalte 1; Spalte 2, Absatz 1; Spalte 7, Zeilen 40-42; Beispiele I-IV,X,XI * | 1-3 | D 21 H 3/36 <br> D 21 H 3/60 <br> B 01 D 19/04 |
| X,Y | ABSTRACT BULLETIN OF THE INST. OF PAPER CHEMISTRY, Band 51, Nr. 5, November 1980, Seite 573, Nr. 5255, Appleton, Wisconsin, USA <br> H. KUSUMOTO et al.: "Paper-sizing reagent" & JP - A - 80 16928 (MITSUBISHI CHEMICAL INDUSTRIES LTD.) 06.02.1980 * Insgesamt * | 1 | |
| Y | WO-A-8 200 039 (ECONOMICS LABORATORY) <br> * Ansprüche 1-47 * | 1-3 | RECHERCHIERTE SACHGEBIETE (Int. Cl. ³) |
| Y | CA-A-1 020 041 (H.J.S. SHANE et al.) <br> * Insgesamt * | 1-3 | B 01 D <br> C 08 L <br> D 21 H |
| Y | US-A-3 215 635 (R. LIEBLING et al.) <br> * Spalten 1-4 * | 1-3 | |

--- -/-

Der vorliegende Recherchenbericht wurde für alle Patentansprüche erstellt.

| Recherchenort <br> DEN HAAG | Abschlußdatum der Recherche <br> 23-09-1983 | Prüfer <br> NESTBY K. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

| | Europäisches Patentamt | **EUROPÄISCHER RECHERCHENBERICHT** |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | RESEARCH DISCLOSURE, Nr. 147, Juli 1976, Seiten 63-65, Nr. 14766, Industrial Opportunities Ltd., G.B. "Process for removing foam from aqueous systems" * Seite 63, linke Spalte und rechte Spalte, Zeilen 1-5; Seite 64, linke Spalte, Absatz 2 * | 1-3 | |
| | --- | | |
| Y | US-A-2 937 104 (J.T. STEPHAN) * Spalte 1, Zeilen 14-35 * | 1-3 | |
| | --- | | |
| Y | US-A-4 230 599 (G.H. ELFERS) * Spalten 1-8 * | 1-3 | |
| | --- | | |
| A | US-A-4 024 072 (H.J.S. SHANE et al.) | | |
| | --- | | **RECHERCHIERTE SACHGEBIETE (Int. Cl. ³)** |
| A | DE-B-1 261 618 (HENKEL) * Ansprüche 1,5 * | 1,3 | |
| | --- | | |
| A | EP-A-0 009 185 (BAYER) | | |
| | --- | | |
| A | US-A-3 004 923 (M.J. JURSICH) | | |
| | ----- | | |

Der vorliegende Recherchenbericht wurde für alle Patentansprüche erstellt.

| Recherchenort DEN HAAG | Abschlußdatum der Recherche 23-09-1983 | Prüfer NESTBY K. |
|---|---|---|

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument